(19) **Europäisches Patentamt**
**European Patent Office**
**Office européen des brevets**

(11) **EP 4 572 244 A1**

(12) **EUROPEAN PATENT APPLICATION**

(43) Date of publication:
**18.06.2025 Bulletin 2025/25**

(21) Application number: **24209836.6**

(22) Date of filing: **30.10.2024**

(51) International Patent Classification (IPC):
*H04L 25/03* (2006.01)

(52) Cooperative Patent Classification (CPC):
**H04L 25/03057**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.12.2023 US 202318542185**

(71) Applicant: **INTEL Corporation
Santa Clara, CA 95054 (US)**

(72) Inventor: **RAMASUBRAMANIAN, Bharath
Sunnyvale,, CA 94087 (US)**

(74) Representative: **Viering, Jentschura & Partner
mbB
Patent- und Rechtsanwälte
Am Brauhaus 8
01099 Dresden (DE)**

(54) **DECISION LOOKAHEAD DIGITAL FEEDBACK EQUALIZER (DFE) TREE**

(57) A digital feedback equalizer (DFE) includes a plurality of loop unrolling circuits and a first plurality of multiplexers. Each loop unrolling circuit of the plurality of loop unrolling circuits is configured to receive an input symbol, generate a plurality of modified symbols based on the input symbol and a plurality of symbol versions associated with a previously generated output symbol, and generate a plurality of output symbols based on the plurality of modified symbols. The first plurality of multiplexers is coupled to a first loop unrolling circuit of the plurality of loop unrolling circuits. The first plurality of multiplexers is configured to output one or more of the plurality of output symbols generated by the first loop unrolling circuit based on a selection signal including one or more of the plurality of output symbols generated by a second loop unrolling circuit of the plurality of loop unrolling circuits.

**FIG. 1**

**Description**

BACKGROUND

High-speed wireline interfaces can be configured with a digital feedback equalizer (DFE) to improve the bit error rate (BER). However, a DFE can be challenging to implement at high data rates due to the necessity of making and propagating a decision every unit interval (UI).

BRIEF DESCRIPTION OF THE DRAWINGS

In the drawings, like numerals may describe the same or similar components or features in different views. Like numerals having different letter suffixes may represent different instances of similar components. Some embodiments are illustrated by way of example, and not limitation, in the figures of the accompanying drawings in which:

FIG. 1 illustrates a block diagram of an analog-to-digital converter (ADC)-based ultra-high speed wireline receiver, in accordance with some embodiments;
FIG. 2 is a graph of a comparison of the vertical bathtub with and without a 1-tap digital DFE, in accordance with some embodiments;
FIG. 3 illustrates a block diagram of a partial 1-tap DFE with pipelining, in accordance with some embodiments;
FIG. 4 illustrates a block diagram of two 8-symbol lookahead DFE for a 16 unit interval (UI) slice, in accordance with some embodiments;
FIG. 5 illustrates a block diagram of N-symbol digital DFE with $2^q$ bits per symbol, in accordance with some embodiments;
FIG. 6 is a block diagram of a loop unrolled DFE for non-return-to-zero (NRZ) encoding, in accordance with some embodiments;
FIG. 7 is a block diagram of a loop unrolled DFE for Pulse Amplitude Modulation 4-level (PAM4) encoding, in accordance with some embodiments;
FIG. 8 illustrates a block diagram of a 2-symbol lookahead DFE for NRZ encoding, in accordance with some embodiments;
FIG. 9 illustrates a block diagram of a 2-symbol lookahead DFE for PAM4 encoding, in accordance with some embodiments;
FIG. 10 illustrates a block diagram of a 2-symbol lookahead DFE applied for N symbol equalization, in accordance with some embodiments;
FIG. 11 illustrates a block diagram of a 4-symbol lookahead DFE, in accordance with some embodiments;
FIG. 12 illustrates a block diagram of a 64-symbol DFE using the lookahead DFE of FIG. 11, in accordance with some embodiments;
FIG. 13 illustrates a block diagram of a loop unrolling circuit used in the lookahead DFE of FIG. 11, in accordance with some embodiments;
FIG. 14 illustrates a block diagram of a plurality of multiplexers configured as a 4x4 multiplexer used in the lookahead DFE of FIG. 11, in accordance with some embodiments;
FIG. 15 illustrates a block diagram of an 8-symbol lookahead DFE, in accordance with some embodiments;
FIG. 16 is a graph of jitter tolerance of existing DFE configurations, in accordance with some embodiments;
FIG. 17 is a graph of jitter tolerance of the disclosed DFE configurations, in accordance with some embodiments;
FIG. 18 is a flow diagram of an example method for symbol equalization, in accordance with some embodiments; and
FIG. 19 illustrates a block diagram of an example machine upon which any one or more of the operations/techniques (e.g., methodologies) discussed herein may perform.

DETAILED DESCRIPTION

The following detailed description refers to the accompanying drawings. The same reference numbers may be used in different drawings to identify the same or similar elements. In the following description, for purposes of explanation and not limitation, specific details are set forth, such as particular structures, architectures, interfaces, techniques, etc., to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail.

The following description and the drawings sufficiently illustrate specific embodiments to enable those skilled in the art to practice them. Other embodiments may incorporate structural, logical, electrical, process, and other changes. Portions and features of some embodiments may be included in or substituted for those of other embodiments. Embodiments outlined in the claims encompass all available equivalents of those claims.

As used herein, the term "chip" (or die) refers to a piece of a material, such as a semiconductor material, that includes a circuit, such as an integrated circuit or a part of an integrated circuit. The term "memory IP" indicates memory intellectual property. The terms "memory IP," "memory device," "memory chip," and "memory" are interchangeable.

The term "a processor" configured to carry out specific operations includes both a single processor configured to carry out all of the operations (e.g., operations or methods disclosed herein) as well as multiple processors individually configured to carry out some or all of the operations (which may overlap) such that the combination of processors carry out all of the operations.

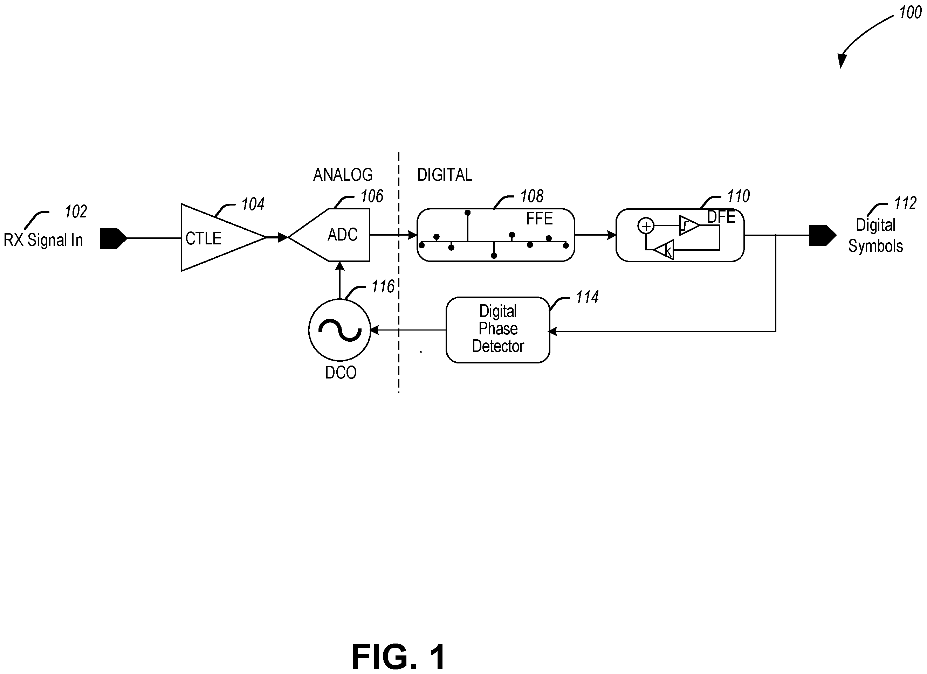

Ultra-high-speed wireline links such as Peripheral Component Interconnect Express (PCIe) Generation 7 (Gen7) at 128 Gb/s (PAM4 at 64 Gb/s) use ADC-based analog front ends followed by extensive digital equalization (e.g., as illustrated in FIG. 1).

FIG. 1 illustrates a block diagram of an ADC-based ultra-high-speed wireline receiver 100, in accordance with some embodiments. Referring to FIG. 1, receiver 100 includes a continuous time linear equalization (CTLE) circuit 104, an ADC 106, a feed-forward equalizer (FFE) 108, a digital feedback equalizer (DFE) 110, a digital phase detector 114, and an oscillator 116.

Incoming received signals 102 are processed in the analog domain and the digital domain to generate digital output symbols 112.

The FFE 108 can be configured with more than 20 taps. However, an FFE produces undesirable undershoots in the pulse response when used to cancel the first post-cursor. Linear equalizers, like the FFE 108, can amplify noise and cross-talk as well.

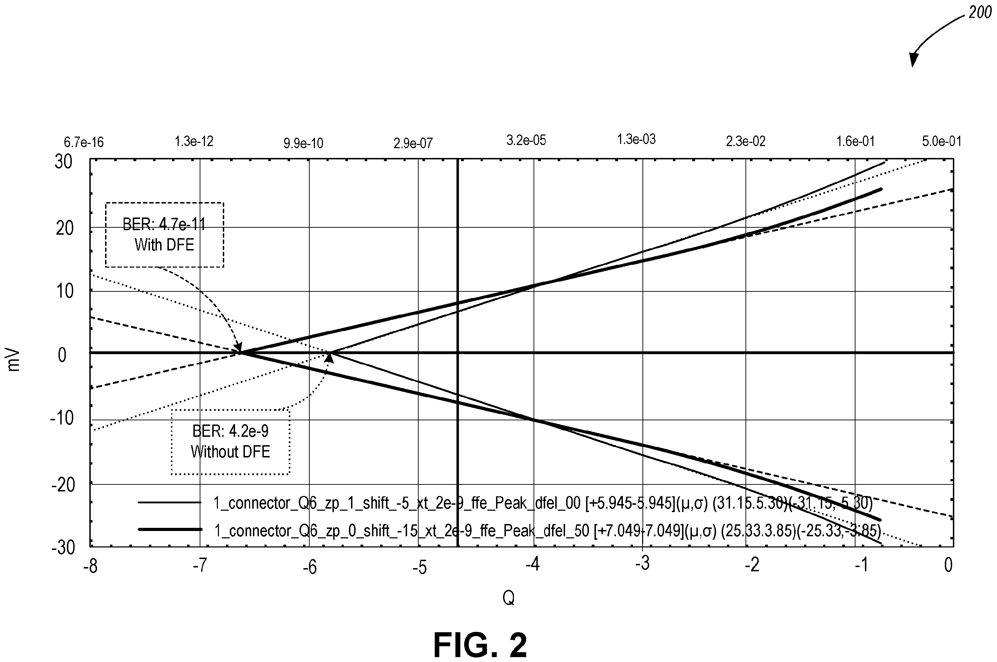

A 1-tap DFE can provide significant improvement in the bit error rate (BER), as can be seen in the bathtub curves of FIG. 2.

FIG. 2 is graph 200 of a comparison of the vertical bathtub with and without a 1-tap digital DFE, in accordance with some embodiments.

In reference to FIG. 2, the top axes is in a log scale and indicates the bit error rate (BER), i.e., the probability of getting a bit error. The left axes is voltage. The two lines in the graph for each of the legends are the positive and negative voltages at the decision slicer. As long as the difference between is greater than 0, the data is correctly extracted. In this regard, the BER is quoted at the point where the two lines intersect and the difference is 0 mv. This will give rise to a bit error and top axes tells what the BER at this point is. The bottom axis is called a Q scale it is used to convert the Gaussian distribution and represent it as straight lines.

As seen in FIG. 2, at very high data rates (e.g., PCIe G7 rates), a full 1 tap DFE is challenging to implement directly due to the necessity of making and propagating a decision every unit interval (UI) (e.g., around 15.6 ps for PCIe G7). Previous solutions have used pipelining but have only been able to implement a partial DFE. Pipelining also adds significant additional latency. Such latency (~ 5ns) is unacceptable for memory access applications. The high latency also significantly degrades the clock and data recovery (CDR) loop bandwidth if the DFE outputs are used to drive the digital phase detector.

The disclosed techniques can be used to implement a full 1-tap DFE for ultra-high-speed wireline interfaces that reduces the latency by greater than ten times (e.g., latency of less than 1ns) over the current state of the art.

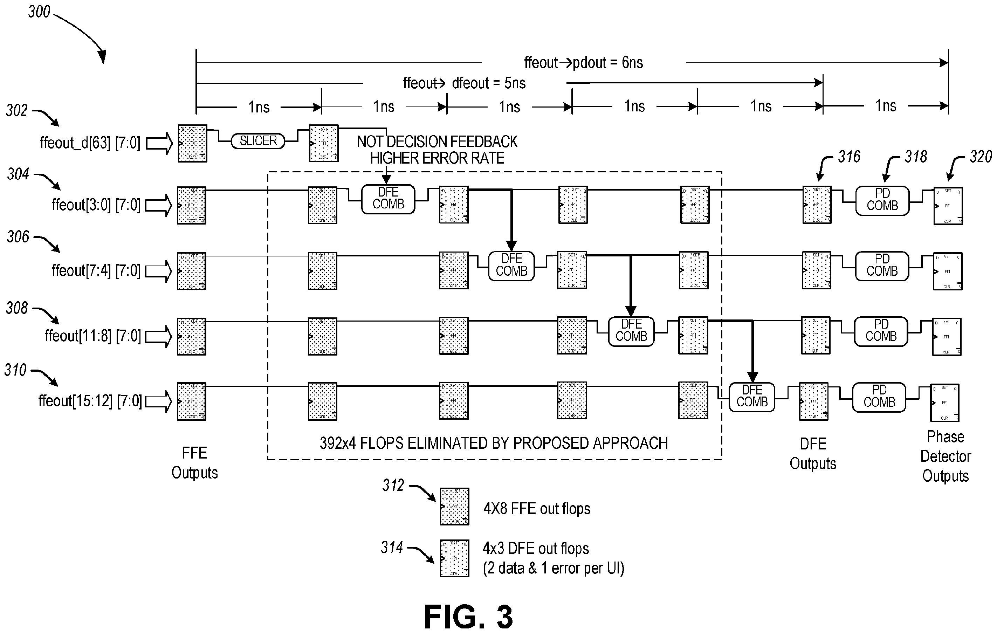

An example of a prior solution is illustrated in FIG. 3. FIG. 3 illustrates a block diagram of a partial 1-tap DFE 300 with pipelining, in accordance with some embodiments. Referring to FIG. 3, DFE 300 uses pipeline processing of input symbols 304, 306, 308, and 310 (e.g., FFE output symbols) where each pipeline uses a decision from a previous pipeline, with the exception of the first pipeline for input symbol 304 which uses input symbol 302. However, input symbol 302 is not from a feedback decision and is associated with a higher error rate. The pipeline stages can use flip-flop circuits 312 and 314. Flip-flop circuits 314 can be used to store the DFE digital output symbols 316. The digital output symbols 316 can be used by phase detector (PD) comb circuits 318 to generate phase detector outputs 320.

In DFE 300, the received symbols are processed in groups of 64 with a 64 UI clock (1 GHz for 128 Gbps). The fundamental timing constraint would be to compute and propagate 64 decisions in 64 UI. The 1-tap DFE for each symbol requires a multiply-add and a decision slicer operation to be completed within 1 UI (~ 15.6ps), which is not practical. Prior solutions have, therefore, resorted to breaking the feedback for every 16th symbol and replacing it with a "feedforward" decision based on the partially equalized symbol from the previous UI (e.g., using input symbol 302). This reduces the timing constraint to compute and propagate 16 decisions in 64 UI. However, even this is challenging to complete within 64 UI (e.g., 1 ns), and pipelining across several cycles is required to close timing. This results in a significant overhead in terms of latency.

The following disadvantages are associated with the existing DFE solution illustrated in FIG. 3:

    (a) High Datapath Latency: Pipelining results in high latency in the critical datapath (5ns for DFE), which is unacceptable in memory-access applications.

(b) Lower Performance due to partial DFE: As described above, every 16th symbol uses the decision on the partially equalized symbol from the previous UI without the benefit of decision feedback equalization. This increases the probability of error in the recovered data, and the larger the DFE coefficient, the higher the likelihood of an error. Once an error is generated, this can also propagate to other symbols, which will degrade the overall BER. Therefore, this implementation puts a practical limit on how much first post-cursor inter-symbol interference (ISI) can be corrected using the digital DFE.

(c) High Flop Count: Pipelining also necessitates additional flop stages to carry forward the unequalized digital samples, as well as the decisions post-DFE, till all the 16 UIs have finished calculating. For a 64 UI datapath, the previous solution will require an additional 1584 flops over the proposed approach.

(d) Degraded CDR Performance: The high latency of the previous approach also precludes using the post-DFE data in the proportional path of a second-order CDR loop. In order to meet the loop latency requirements, a parallel FFE needs to be implemented, and this will add more area and power as well.

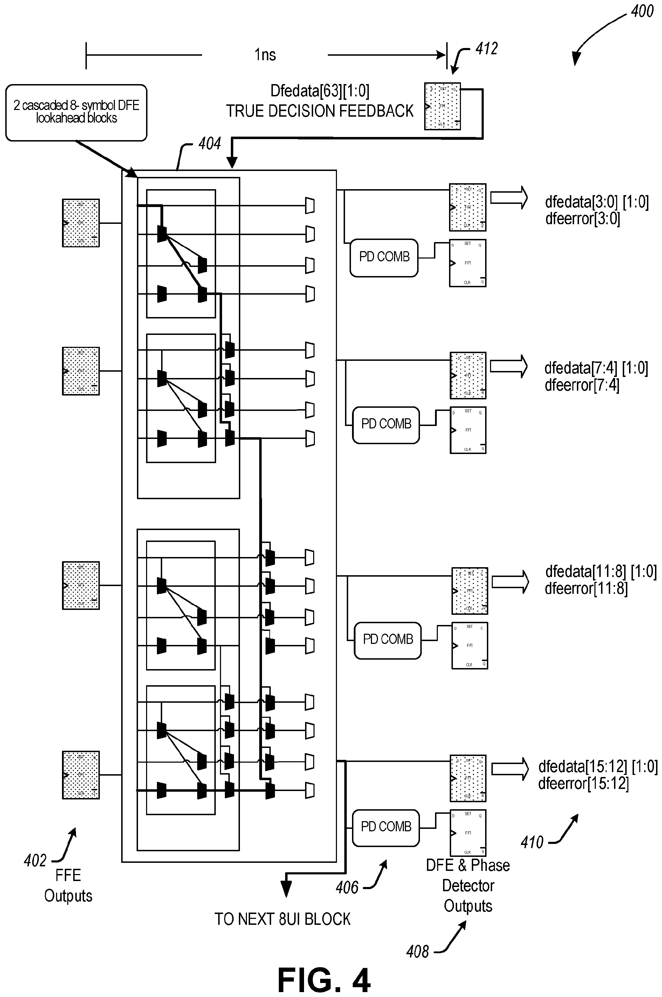

The disclosed DFE configurations (e.g., DFEs described in connection with FIGS. 4-19) mitigate or prevent the above deficiencies. More specifically,

This invention provides a complete 1-tap DFE solution with much lower latency (reduced from 5ns to ~0.5ns) and fewer physical flops. As a result, the RX data path latency can be shrunk from 7ns to 3ns, enabling faster memory accesses via CXL and inter-socket data accesses via UXI. It also enables achieving higher CDR bandwidth (10MHz), which is required for PCIe, by keeping the CDR proportional path latency low. It significantly cuts down the number of flops (by 1584) over the prior art and even more by potentially eliminating the need for a separate parallel digital equalizer for the CDR.

FIG. 4 illustrates a block diagram of a signal processing system 400, including two 8-symbol lookahead DFEs for a 16 UI slice, in accordance with some embodiments. Referring to FIG. 4, the signal processing system 400 includes DFEs 404 receiving input symbols 402 (e.g., FFE outputs) to generate digital output symbols 410. The digital output symbols are also communicated to digital phase detectors (DPDs) (or phase detector combs) 406 for generating phase detector outputs 408, which can be used for adjusting an oscillator and ADC (e.g., as illustrated in FIG. 1). In some aspects, DFEs 404 use a true decision feedback symbol 412 to generate the digital output symbols 410.

In some aspects, DFEs 404 can be used to reduce the computation time for a digital DFE by parallelizing the computations with loop unrolling and multiple symbols lookahead processing. Within a given block of symbols, the computation time can be reduced from O(N) to O($\log_2$N). For the decision feedback path, this can be reduced from O(N) to just 1 in the most optimal case. For example, DFEs 404 complete within 0.5ns, which allows integration of error slicer and phase detector logic within the same cycle.

The disclosed techniques include an approach for doing a multiple symbol look ahead for a digital DFE for ultra-high speed wireline links like PCIe Gen7 at 128 Gbps (GS/s). This is essential for the practical realization of a complete digital DFE at these speeds.

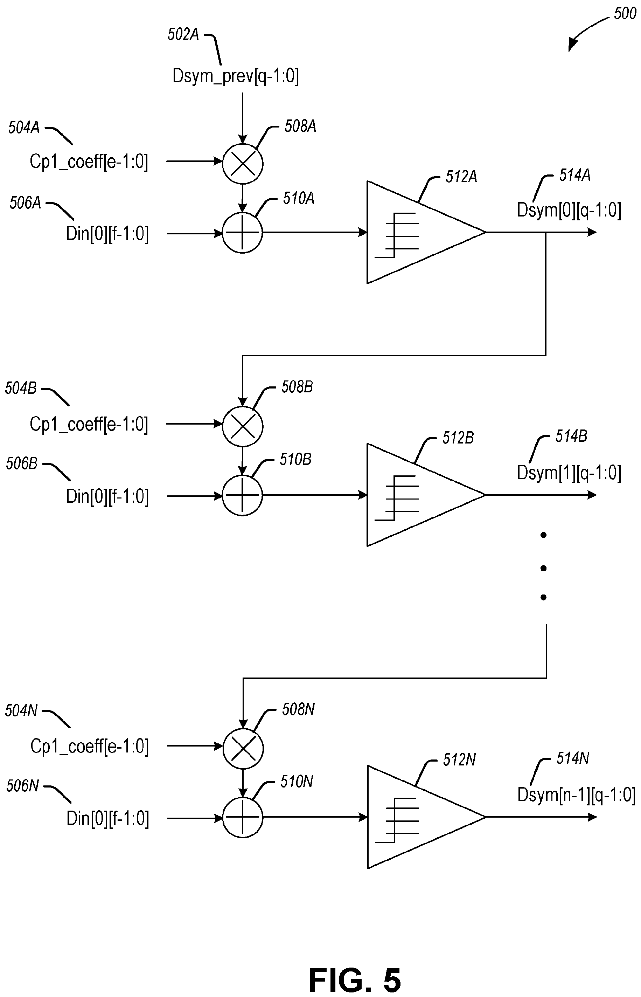

In some aspects, a DFE uses the decision on the previously received symbol to remove the ISI on the current symbol introduced by the previous symbol. FIG. 5 shows an implementation of a DFE.

FIG. 5 illustrates a block diagram of an N-symbol digital DFE 500 with $2^q$ bits per symbol, in accordance with some embodiments. Referring to FIG. 5, DFE 500 includes sequential processing of input symbols 506A, 506B, ..., 506N based on multiplying a previously determined digital output symbol (e.g., digital output symbols 502A, 514A, 514B, ... etc.) with adaptation coefficients 504A, 504B, ..., 504N using multipliers 508A, 508B, ..., 508N. The multiplied output is added with the input symbols 506A, 506B, ..., 506N by adders 510A, 510B, ..., 510N and processed by corresponding comparators 512A, 512B, ..., 512N (also referred to as slicers) to generate digital output symbols 514A, 514B, ..., 514N.

The inputs are a sampled digital representation of the incoming signal generated using an ADC. Multiple symbols are accumulated and then sent to the digital signal processing block to recover the initially transmitted symbol value. The total delay to perform DFE for a set of n symbols would be:

$$n \times (T_{mult} + T_{add} + T_{slice}) \quad (1),$$

where $T_{mult}$, $T_{add}$, and $T_{slice}$ are the combination logic delays for the 7x2 bit digital multiplier, 8-bit adder, and 8-bit slicer respectively. The first-order logic gate depth for these three are 10, 5, and 5 respectively.

A slicer (e.g., comparator 512A) gets a 7-bit value corresponding to the value of the input voltage and it will compare this to 3 pre-programmed voltage values. The delay Tslice is the amount of logic delay to compare against the 3 reference voltage levels and generate the output.

The fundamental constraint for timing closure is as follows:

$$n \times (T_{mult} + T_{add} + T_{slice}) < n \times T_{UI} \quad (2),$$

or equivalently

$$(T_{mult} + T_{add} + T_{slice}) < T_{UI} \quad (3).$$

where $T_{UI}$ is one UI for the data transfer, for example, 15.625 ps for PCIe Gen7 at 128 Gb/s (64 GSamples/s or 64 GS/s). Note that the above constraint does not account for physical implementation realities such as clock skew and flop setup time requirements, which would make it even more challenging to implement. With the above estimates for the logic gate depth, the sum amounts to about 20 gate delays. Estimating 10 ps per gate delay leads to a total of 200 ps, which is higher than the 15.625 ps UI. Such a direct implementation is not feasible for data rates above 5 GS/s.

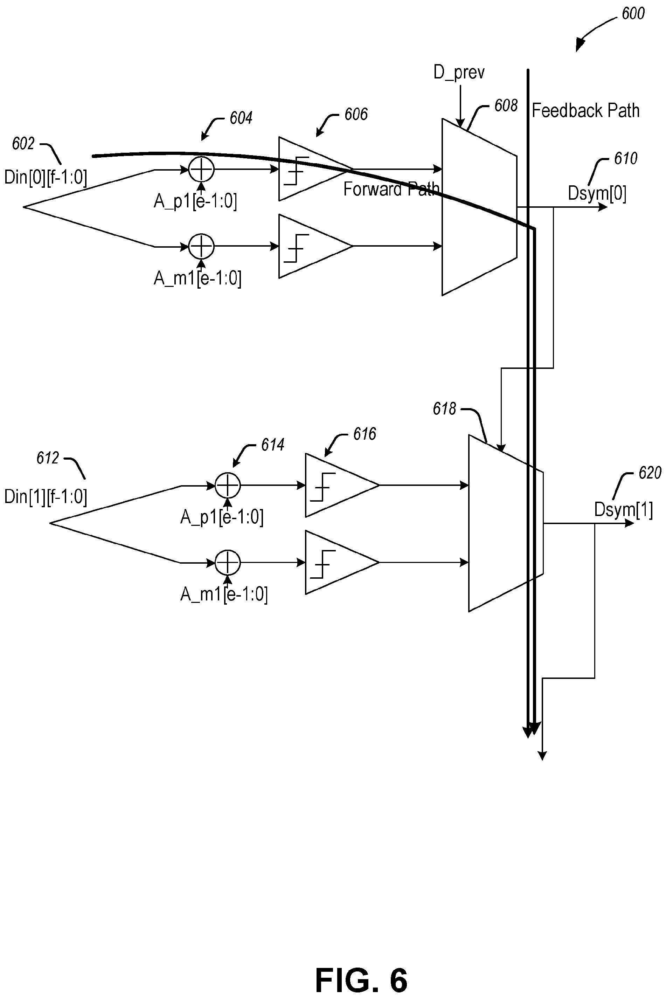

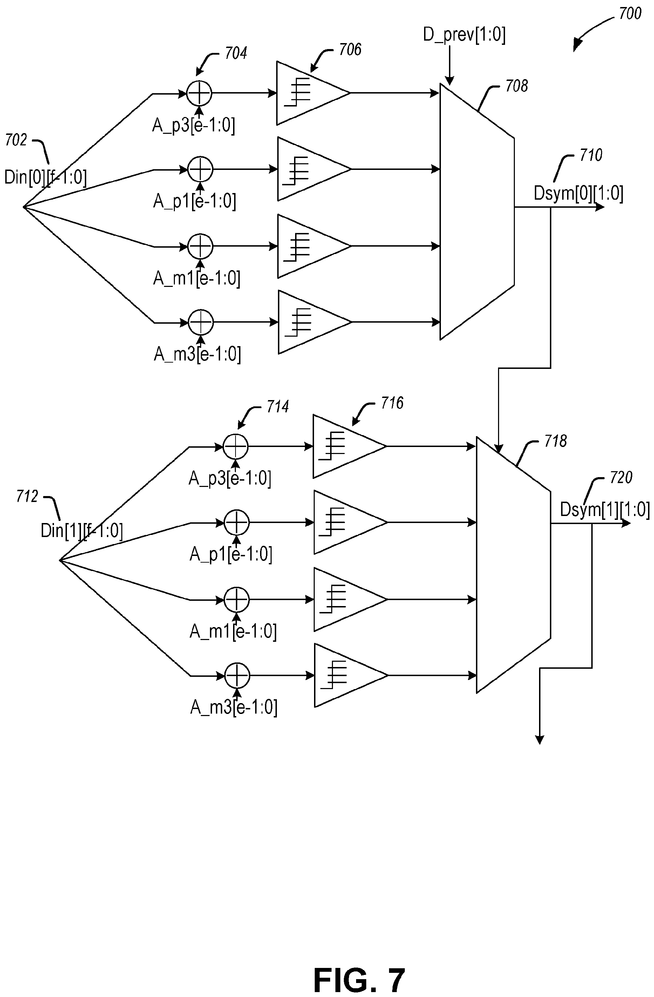

In some aspects, loop unrolling can be used to reduce the delay through the DFE, where the symbols for all the different combinations of the previous symbol are calculated in parallel, and the decisions are then propagated through all the n symbols. FIG. 6 and FIG. 7 show the block diagram for a loop unrolled DFE for NRZ and PAM4 encoding.

FIG. 6 is a block diagram of a loop unrolled DFE 600 for non-return-to-zero (NRZ) encoding, in accordance with some embodiments. Referring to FIG. 6, DFE 600 includes parallel processing lines for input symbols 602 and 612. The processing line for input symbol 602 includes adders 604, comparators 606, and multiplexer 608. Adders 604 are used to add the input symbol with possible previous output symbols to obtain possible outputs corresponding to the input symbol 602. Multiplexer 608 selects one of the possible outputs as digital output symbol 610 based on a selection signal (e.g., a previously determined output symbol such as D_prev).

The processing line for input symbol 612 includes adders 614, comparators 616, and multiplexer 618. Adders 614 are used to add the input symbol with possible previous output symbols to obtain possible outputs corresponding to the input symbol 612. Multiplexer 618 selects one of the possible outputs as digital output symbol 620 based on a selection signal (e.g., a previously determined output symbol such as digital output symbol 610).

FIG. 7 is a block diagram of a loop unrolled DFE 700 for Pulse Amplitude Modulation 4-level (PAM4) encoding, in accordance with some embodiments. Referring to FIG. 7, DFE 700 includes parallel processing lines for input symbols 702 and 712. The processing line for input symbol 702 includes adders 704, comparators 706, and multiplexer 708. Adders 704 are used to add the input symbol with possible previous output symbols to obtain possible outputs corresponding to the input symbol 702. Multiplexer 708 selects one of the possible outputs as digital output symbol 710 based on a selection signal (e.g., a previously determined output symbol such as D_prev).

The processing line for input symbol 712 includes adders 714, comparators 716, and multiplexer 718. Adders 714 are used to add the input symbol with possible previous output symbols to obtain possible outputs corresponding to the input symbol 712. Multiplexer 718 selects one of the possible outputs as digital output symbol 720 based on a selection signal (e.g., a previously determined output symbol such as digital output symbol 710).

In the examples of FIGS. 6-7, there are two timing constraints: the DFE forward path and the feedback path (as indicated in FIGS. 6-7). The forward and feedback path timing constraints based on the total delay for n symbols are respectively as follows:

$$T_{add} + T_{slice} + n \times T_{mux} < n \times T_{UI} \quad (4)$$

*and*

$$n \times T_{mux} < n \times T_{UI} \quad (5).$$

The delay is still of the order of O(n), but the daisy chained delays are multiplexer (MUX) delays, which are smaller than adder, slicer, and multiplier delays. Assuming $T_{mux}$ to be 3 gate delays and $n = 64$, the loop-unrolling approach can be viable until about a symbol rate of 30 GS/s (and lower than that).

The disclosed techniques herein below include a method to reduce the delay further using a symbol look ahead approach that can reduce the total MUX delays to O(log$_2$n). First, a one-symbol look ahead is described below. A tree-based approach is next presented, which allows a lookahead across multiple symbols and enables the reduction of total delay from O(n) to O(log$_2$n).

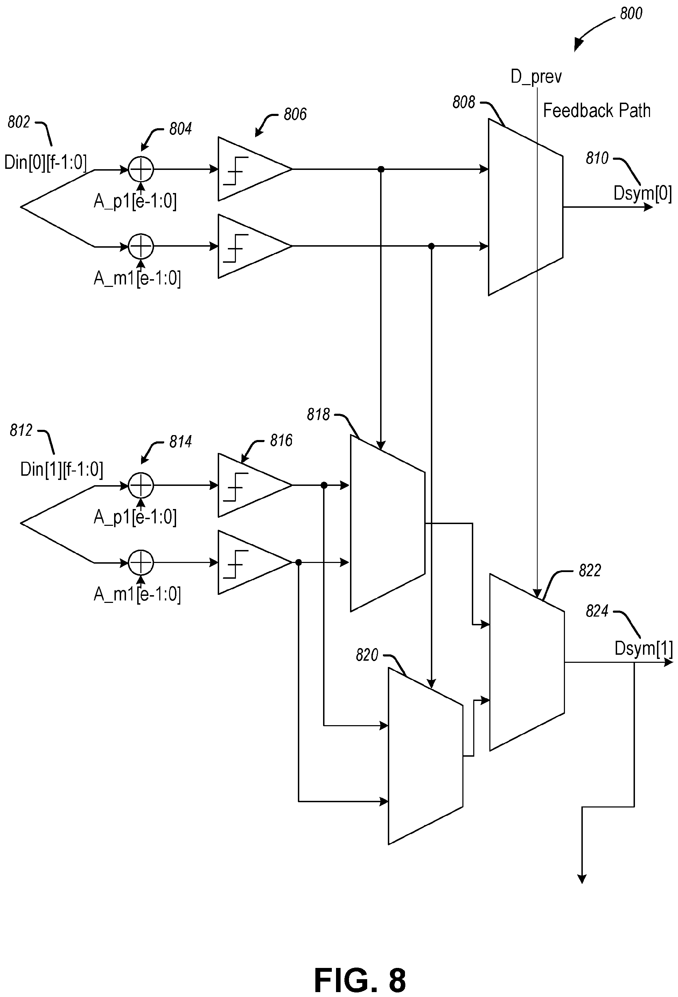

FIG. 8, FIG. 9, and FIG. 10 show how a one symbol look ahead with loop unrolling can be used to reduce the number of MUX delays by 50%.

FIG. 8 illustrates a block diagram of a 2-symbol lookahead DFE 800 for NRZ encoding, in accordance with some embodiments. Referring to FIG. 8, DFE 800 includes parallel processing lines for input symbols 802 and 812. The processing line for input symbol 802 includes adders 804, comparators 806, and multiplexer 808. Adders 804 are used to add the input symbol with possible previous output symbols to obtain possible outputs corresponding to the input symbol 802. Multiplexer 808 selects one of the possible outputs as digital output symbol 810 based on a selection signal (e.g., a previously determined output symbol such as D_prev).

The processing line for input symbol 812 includes adders 814, comparators 816, and multiplexers 818, 820, and 822. Adders 814 are used to add the input symbol with possible previous output symbols to obtain possible outputs corresponding to the input symbol 812. Multiplexers 818-822 are used for selecting one of the possible outputs as digital output symbol 824 based on selection signals from the processing line for input symbol 802 as well as the previously determined output symbol such as D_prev.

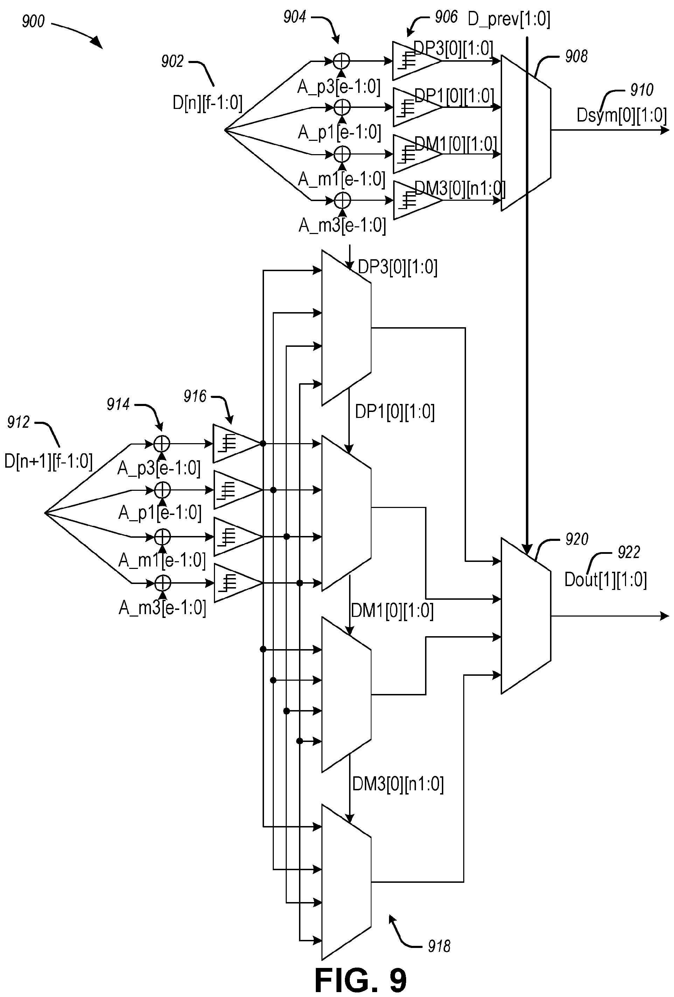

FIG. 9 illustrates a block diagram of a 2-symbol lookahead DFE 900 for PAM4 encoding, in accordance with some embodiments. Referring to FIG. 9, DFE 900 includes parallel processing lines for input symbols 902 and 912. The processing line for input symbol 902 includes adders 904, comparators 906, and multiplexer 908. Adders 904 are used to add the input symbol with possible previous output symbols to obtain possible outputs corresponding to the input symbol 902. Multiplexer 908 selects one of the possible outputs as digital output symbol 910 based on a selection signal (e.g., a previously determined output symbol such as D_prev).

The processing line for input symbol 912 includes adders 914, comparators 916, and multiplexers 918 and 920. Adders 914 are used to add the input symbol with possible previous output symbols to obtain possible outputs corresponding to the input symbol 912. Comparators 916 are used to compare the input signal received from the adders with a known voltage signal to generate a digital output symbol. Multiplexers 918-920 are used for selecting one of the possible outputs as digital output symbol 922 based on selection signals from the processing line for input symbol 902 as well as the previously determined output symbol such as D_prev.

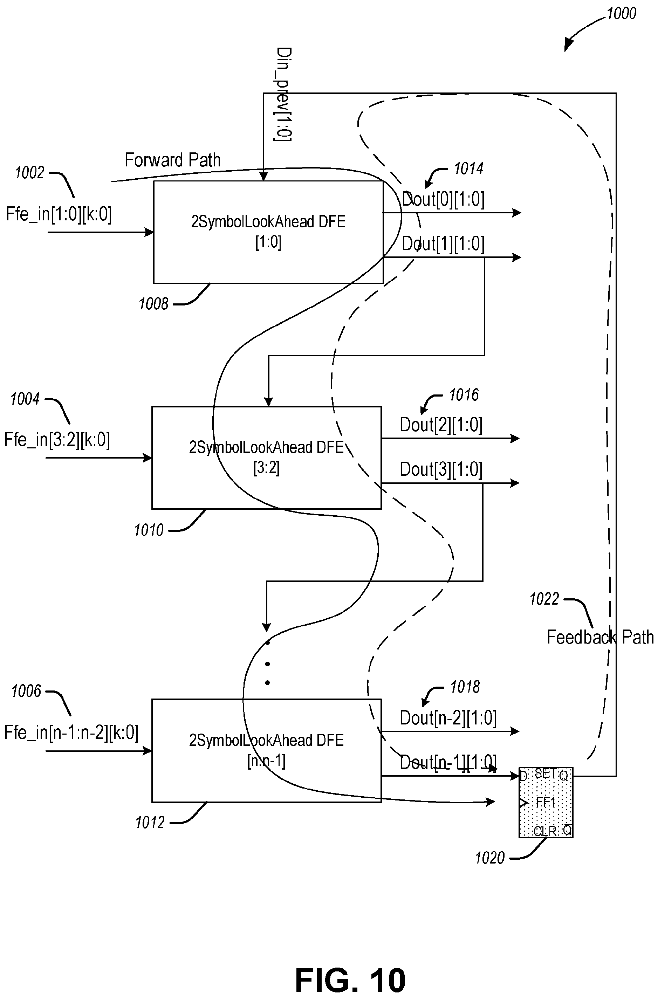

FIG. 10 illustrates a block diagram of an equalization system 1000 using 2-symbol lookahead DFEs applied for N symbol equalization, in accordance with some embodiments. FIG. 10 is a more general view of the PAM4-based processing of FIG. 9. Referring to FIG. 10, input symbols 1002, 1004, ..., 1006 are processed by corresponding 2-symbol lookahead DFEs 1008, 1010, ..., 1012 to generate corresponding output symbols 1014, 1016, ..., 1018. The equalization system 1000 further includes a flip-flop circuit 1020 to store one of the output symbols 1018 to be communicated as a selection signal via the feedback path 1022.

The loop unrolled values from the first symbol are used to reduce the possible values for the second symbol to values that depend only on the symbol coming into this set of 2 symbols. The total DFE forward and feedback path computation delays are now reduced to the following:

$$T_{add} + T_{slice} + \left(\frac{n}{2} + 1\right) \times T_{mux} \quad (6),$$

*and*

$$\left(\frac{n}{2}\right) \times T_{mux} \quad (7).$$

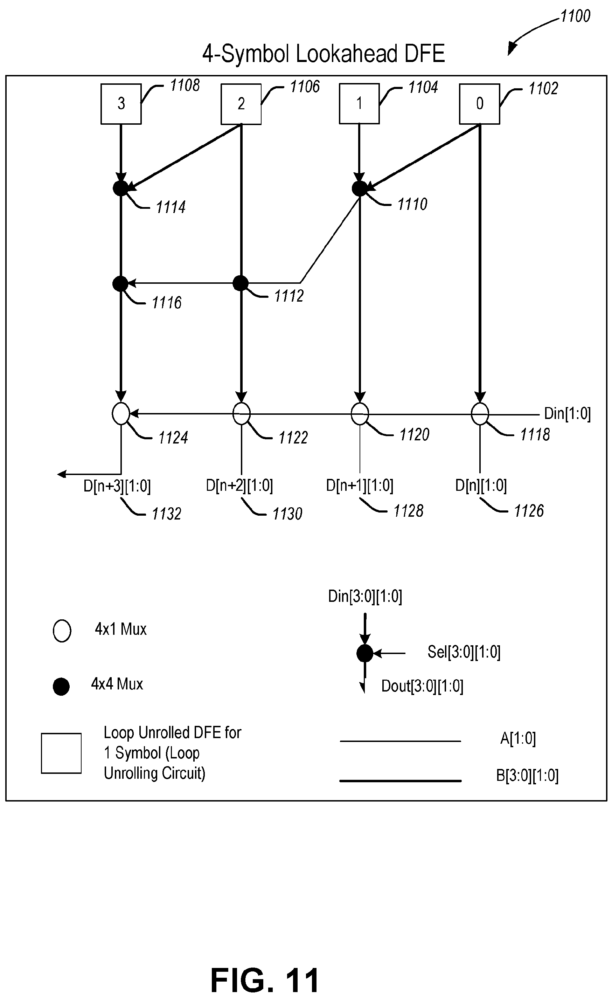

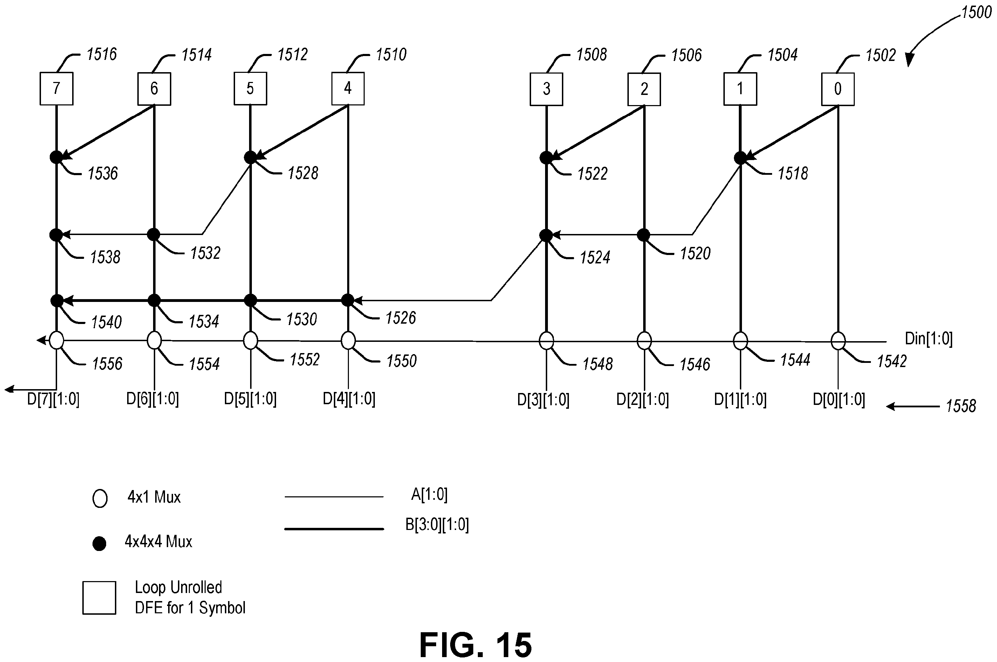

This principle can then be extended even further across multiple symbols all the way up to N input symbols. In some aspects, the multiple symbol lookahead can be implemented in a tree-style structure. The symbol lookahead for groups of 2 symbols is generated first, followed by groups of 4 symbols, and so on till all N symbols have been covered. For ease of understanding, this is represented in terms of a dot diagram, which is explained in connection with FIG. 11 - FIG. 15. FIGS. 11-14 show how a 4-symbol lookahead block can be implemented, and these can be daisy-chained to implement a 64-symbol DFE. FIG. 15 shows how an 8-symbol lookahead DFE can be implemented.

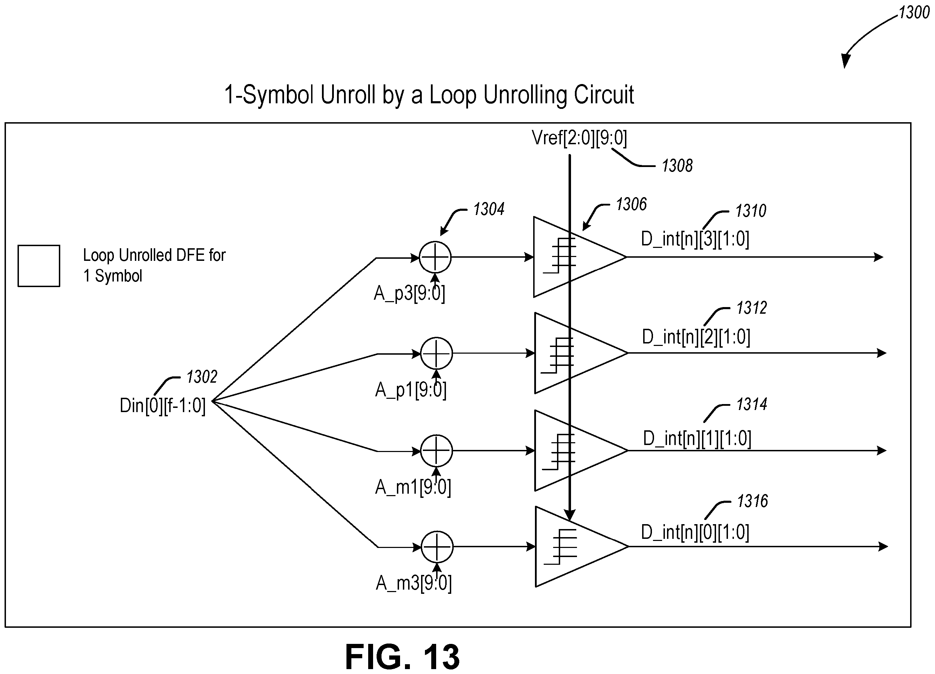

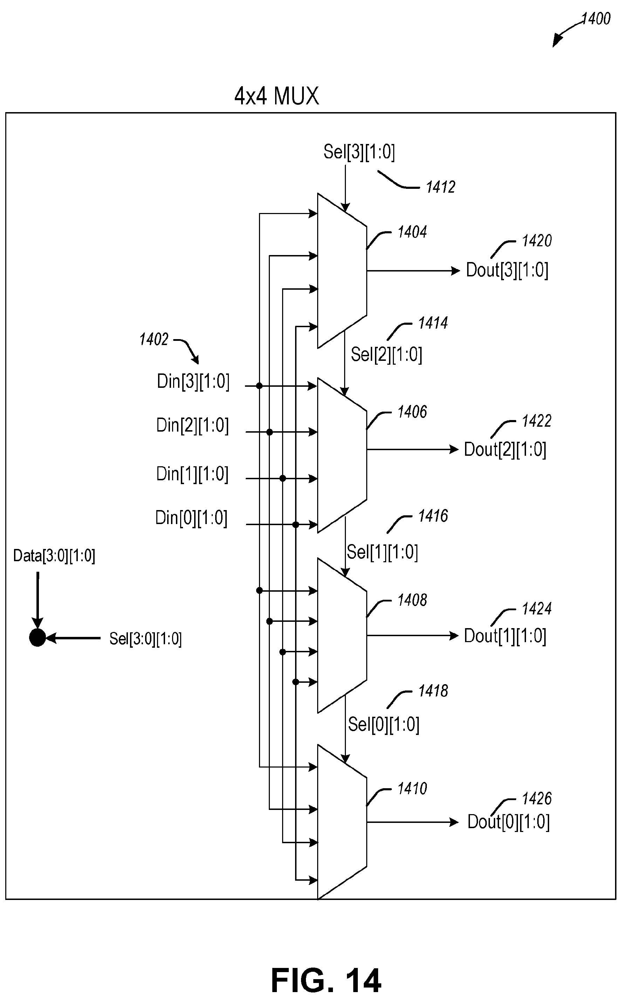

FIG. 11 illustrates a block diagram of a 4-symbol lookahead DFE 1100, in accordance with some embodiments. Referring to FIG. 11, DFE 1100 includes loop unrolling circuits 1102, 1104, 1106, and 1108 (which are described in greater detail in FIG. 13). DFE 1100 further includes 4x4 multiplexers 1110, 1112, 1114, and 1116. Each of the 4x4 multiplexers (MUXs) includes a plurality of multiplexers (e.g., 4-input-1-output multiplexers or other multi-input-single-output multiplexers), which are described in greater detail in FIG. 14. DFE 1100 further includes multiplexers 1118, 1120, 1122, and 1124, which can be configured as multi-input-single-output multiplexers. Multiplexers 1118, 1120, 1122, and 1124 (also referred to as 4x1 MUXs) generate the corresponding digital output symbols 1126, 1128, 1130, and 1132 based on a selection signal Din (which can be a previously generated output symbol).

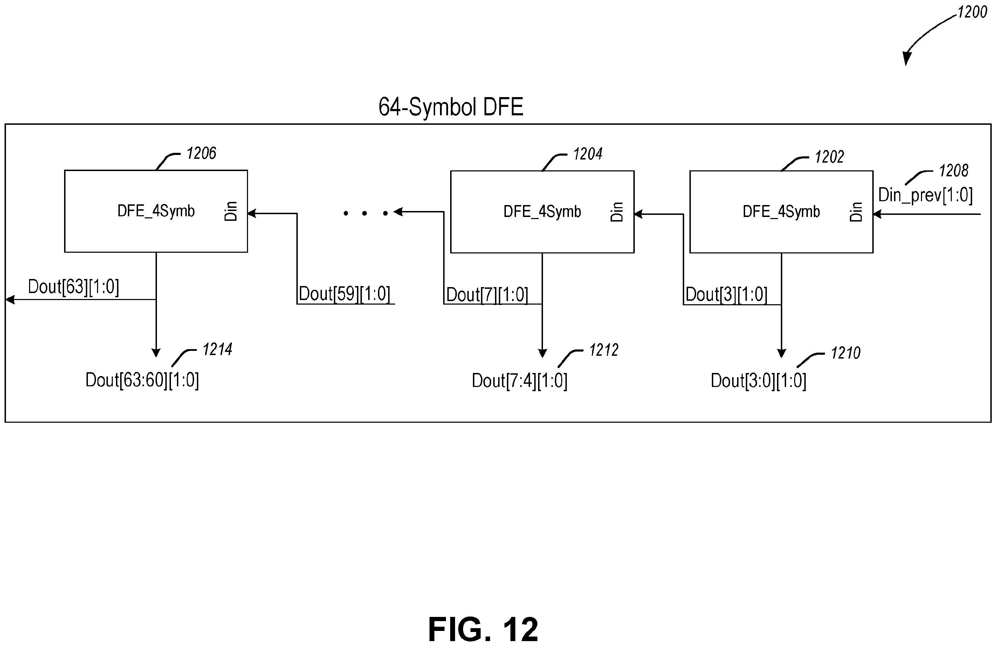

As illustrated in FIG. 11, selection signals for 4x4 MUX 1110 are the outputs of loop unrolling circuit 1102, selection signals for 4x4 MUX 1114 are the outputs of loop unrolling circuit 1106, and selection signals for 4x4 MUXs 1112 and 1116 are the outputs of 4x4 MUX 1110. The output of 4x1 MUX 1124 can be used as a MUX selection signal for a subsequent lookahead DFE (e.g., as illustrated in FIG. 12).

FIG. 12 illustrates a block diagram of a 64-symbol DFE using the lookahead DFE of FIG. 11, in accordance with some embodiments. Referring to FIG. 12, the 64-symbol DFE 1200 can include multiple 4-symbol lookahead DFEs 1202, 1204, ..., 1206, which can be configured as the 4-symbol lookahead DFE 1100. The 4-symbol lookahead DFEs 1202, 1204, ..., 1206 generate corresponding digital output symbols 1210, 1212, ..., 1214.

As illustrated in FIG. 12, the first 4-symbol lookahead DFE 1202 uses a previously generated digital output symbol Din_prev 1208 as a selection signal. After that, each of the subsequent 4-symbol lookahead DFEs 1204, ..., 1206 uses the digital output symbols generated by the prior DFE, with the last DFE 1206 supplying digital output symbol 1214 as a selection signal for the following DFE (not illustrated in FIG. 12).

FIG. 13 illustrates a block diagram of a loop unrolling circuit 1300 used in the lookahead DFE of FIG. 11, in accordance with some embodiments. Referring to FIG. 13, loop unrolling circuits 1300.

The processing line for input symbol 1302 includes adders 1304 and comparators 1306. Adders 1304 are used to add the input symbol with possible previous output symbols to obtain possible outputs corresponding to the input symbol 1302. Comparators 1306 compare the output symbol from adders 1304 with a voltage reference signal 1308 to generate corresponding digital output symbols 1310, 1312, 1314, and 1316, which represent all possible output symbols associated with input symbol 1302.

FIG. 14 illustrates a block diagram of a plurality of multiplexers configured as a 4x4 MUX 1400 used in the lookahead DFE of FIG. 11, in accordance with some embodiments. Referring to FIG. 14, the 4x4 MUX 1400 includes multiplexers 1404, 1406, 1408, and 1410, with each multiplexer receiving the digital output symbols 1402 (which can be the output of a corresponding loop unrolling circuit).

Multiplexers 1404, 1406, 1408, and 1410 use corresponding selection signals 1412, 1414, 1416, and 1418 to select a digital output symbol 1420, 1422, 1424, and 1426 as multiplexer outputs.

FIG. 15 illustrates a block diagram of an 8-symbol lookahead DFE 1500, in accordance with some embodiments. Referring to FIG. 15, DFE 1500 includes loop unrolling circuits 1502, 1504, 1506, 1508, 1510, 1512, 1514, and 1516 (which are described in greater detail in FIG. 13). DFE 1500 further includes 4x4 MUXs 1518, 1520, 1522, 1524, 1526, 1528, 1530, 1532, 1534, 1536, 1538, and 1540. Each of the 4x4 MUXs includes a plurality of multiplexers (e.g., 4-input-1-output multiplexers or other multi-input-single-output multiplexers), which are described in greater detail in FIG. 14. DFE 1500 further includes MUXs 1542, 1544, 1546, 1548, 1550, 1552, 1554, and 1556, which can be configured as multi-input-single-output multiplexers. MUXs 1542-1556 generate digital output symbols 1558 based on a selection signal Din (which can be a previously generated output symbol).

Selection signals for the 4x4 MUXs 1518-1540 can be output symbols from loop unrolling circuits or other 4x4 MUXs (e.g., as illustrated in FIG. 15).

The DFE configurations of FIG. 11 and FIG. 15 can be extended to any grouping of symbols within the total symbol count of *n* symbols.

In some aspects, for a grouping of *m* symbols of lookahead, the number of 4x4 MUX levels in the forward path would be $log_2(m)$.

The constraints for the total delay through the forward and feedback logic paths of the DFE will be as follows:

$$T_{add} + T_{slice} + log_2(m) * T_{mux} + MAX\left(\left(\frac{n}{m} - 1\right), 1\right) \times T_{mux} < nT_{UI} \quad (8)$$

and

$$\left(\frac{n}{m}\right) \times T_{mux} < nT_{UI} \quad (9).$$

When n=m, the total MUX delays will be log(n) +1 and the delay along the feedback path will be 1, i.e., a constant independent of *n*.

Plugging in the initial logic depth estimates, it is seen that with the appropriate choice of the number of symbols to lookahead ($m$), a complete 1-tap DFE can be implemented for 64 GS/s or even higher symbol rates. In some aspects, the forward evaluation path can be pipelined to arbitrary depth if needed. However, for PCIe Gen7 at 64 GS/s, no pipelining is required with a 64 UI logic clock as the total logic depth estimate with $n = 64$ *and* $m = 8$ is about 50 corresponding to a total gate delay estimate of 0.5ns, which is less than the clock period of 1ns. Likewise, the feedback path delay estimate for a logic depth estimate of 24 is 240ps, which is less than the clock period.

Table 1 below shows a comparison of the look ahead implementation with the prior approach. The DFE by itself is about 40% larger. However, when the additional cost of adding an FFE for the CDR path is accounted for, the area for the entire DSP (FFE +DFE+PD) is comparable. Without including the additional FFE for the CDR, the area impact for the entire DSP (FFE+DFE) is only ~ 4%, since the DFE is only about 1/10th the size of the FFE.

TABLE 1

| Implemntation | Latenc y (nS) | Full/Partial DFE | Area | | | |
|---|---|---|---|---|---|---|
| | | | DFE | FFE | FFE_for PD | Total DSP |
| Pipelined DFE (Prior Approach) | 5 | Partial | 1x | 9x | 1x | 11x |
| 8Sym LA (Proposed Approach) | 0.5 | Full | 1.4x | 9x | 1x | 10.4x |

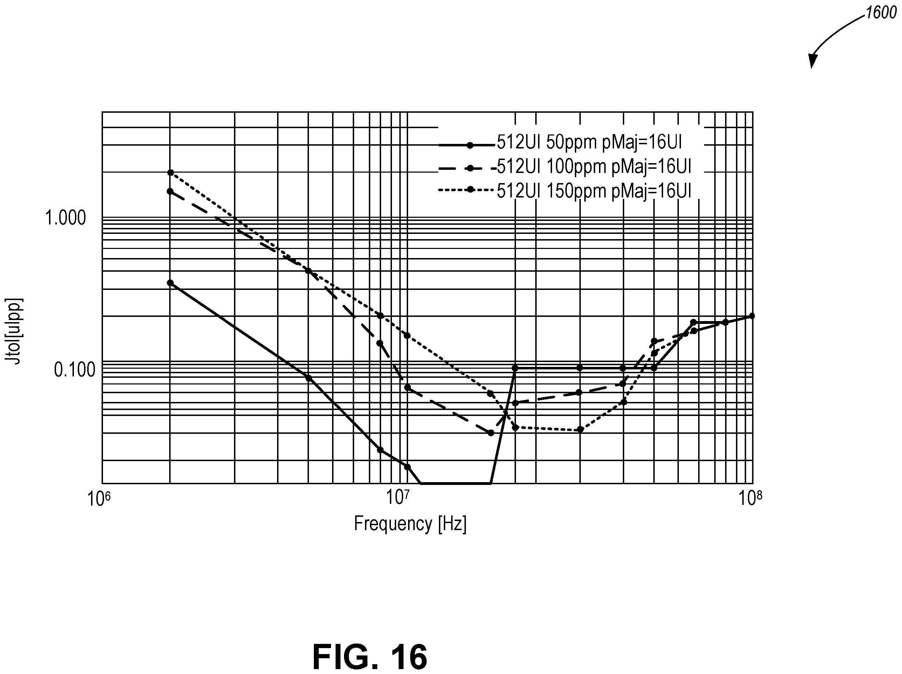

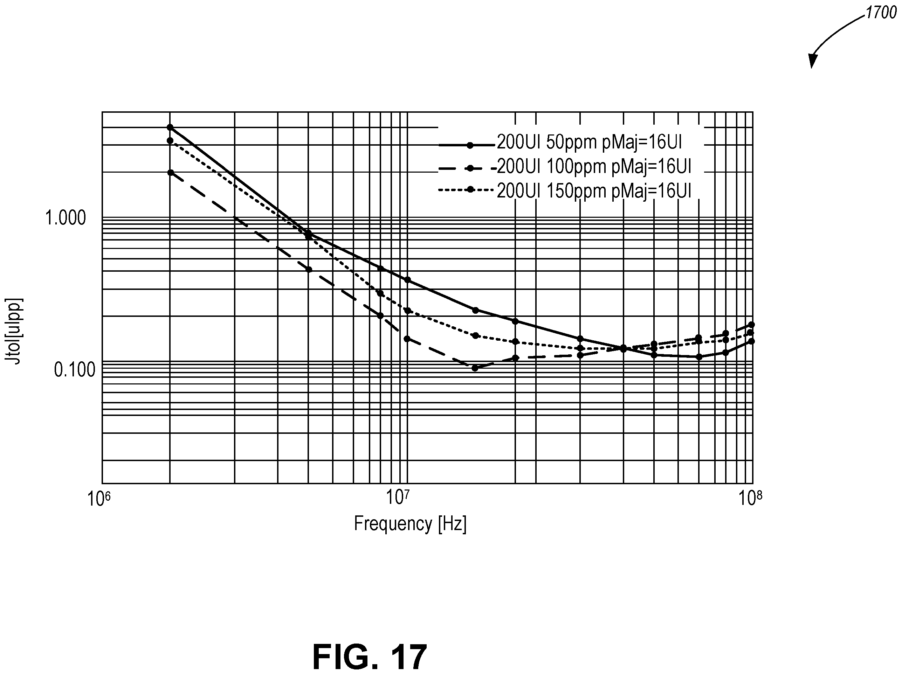

FIG. 16 and FIG. 17 show the improved jitter tolerance that can be obtained with the low latency phase detector made possible with the proposed approach and highlights one of the benefits of a low latency solution.

FIG. 16 is graph 1600 of the jitter tolerance of existing DFE configurations, in accordance with some embodiments.

FIG. 17 is a graph 1700 of jitter tolerance of the disclosed DFE configurations, in accordance with some embodiments.

In this regard, the disclosed DFE techniques can be used for reducing the total evaluation time for a digital DFE and for reducing it from O(n) to O(log(n)) by using a decision look ahead tree. This will cut the evaluation delay for a digital DFE by > 5-10X over prior art with comparable area while using fewer logic flops and will enable ultra-high speed wireline links to employ a complete digital DFE solution with the associated performance improvements.

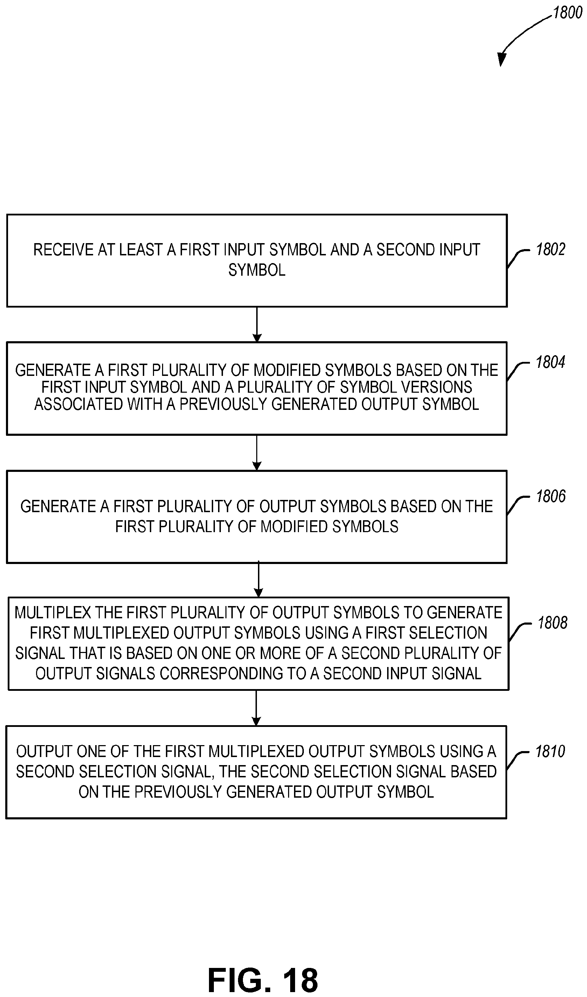

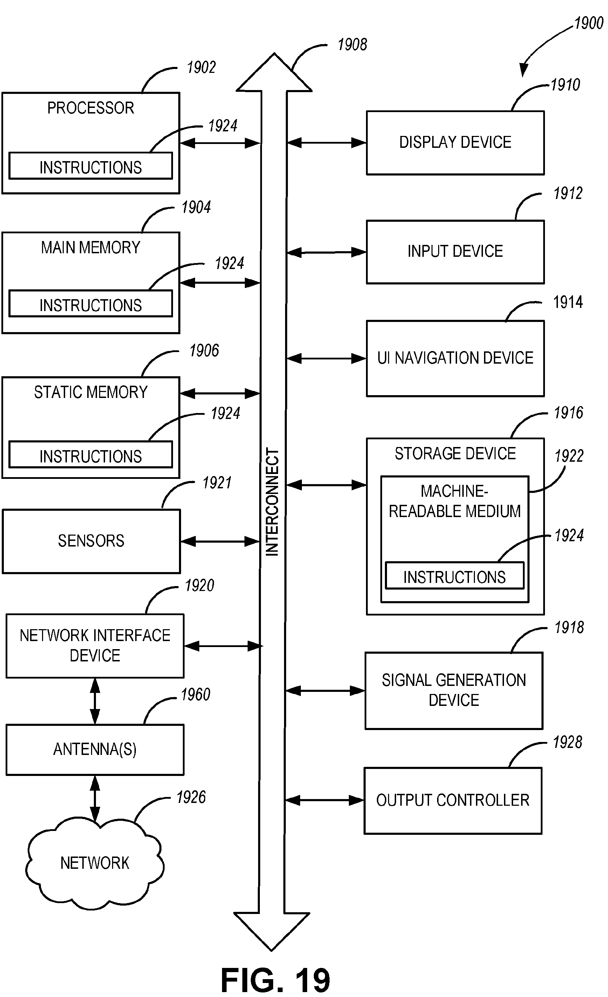

FIG. 18 is a flow diagram of an example method for symbol equalization, in accordance with some embodiments. Referring to FIG. 18, method 1800 includes operations 1802, 1804, 1806, 1808, and 1810, which may be executed by an embedded controller or another processor of a computing device (e.g., hardware processor 1902 of machine 1900 illustrated in FIG. 19, which can include one or more of the circuits discussed in connection with FIGS. 1-17). In some embodiments, one or more of the circuits discussed in connection with FIGS. 1-17 can perform the functionalities listed in FIG. 18, as well as in the examples listed below.

At operation 1802, at least a first input symbol and a second input symbol are received (e.g., as received by loop unrolling circuits 1102 and 1104).

At operation 1804, a first plurality of modified symbols is generated based on the first input symbol and a plurality of symbol versions associated with a previously generated output symbol (e.g., as generated by the adders and comparators of the loop unrolling circuit 1104).

At operation 1806, a first plurality of output symbols is generated based on the first plurality of modified symbols (e.g., the output symbols from loop unrolling circuit 1104).

At operation 1808, the first plurality of output symbols are multiplexed (e.g., by 4x4 MUX 1110) to generate the first multiplexed output symbols using a first selection signal. The first selection signal is based on one or more of a second plurality of output signals corresponding to a second input signal (e.g., the selection signal for 4x4 MUX 1110 is based on the output symbols generated by loop unrolling circuit 1102).

At operation 1810, one of the first multiplexed output symbols is output (e.g., by MUX 1120) using a second selection signal. The second selection signal is based on the previously generated output symbol (e.g., output symbol Din, as illustrated in FIG. 11).

FIG. 19 illustrates a block diagram of an example machine 1900 upon which any one or more of the techniques (e.g., methodologies) discussed herein may perform. In alternative embodiments, the machine 1900 may operate as a standalone device or may be connected (e.g., networked) to other machines. In a networked deployment, machine 1900 may operate in the capacity of a server machine, a client machine, or both in server-client network environments. In an example, machine 1900 may function as a peer machine in a peer-to-peer (P2P) (or other distributed) network environment. The machine 1900 may be a personal computer (PC), a tablet PC, a set-top box (STB), a personal digital assistant (PDA), a portable communications device, a mobile telephone, a smartphone, a web appliance, a network router, switch or bridge, or any other computing device capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations. The terms "machine," "computing device," and "computer system" are used interchangeably.

Machine (e.g., computer system) 1900 may include a hardware processor 1902 (e.g., a central processing unit (CPU), a graphics processing unit (GPU), a hardware processor core, or any combination thereof), a main memory 1904, and a static memory 1906, some or all of which may communicate with each other via an interlink (e.g., bus) 1908. In some aspects, the main memory 1904, the static memory 1906, or any other type of memory (including cache memory) used by machine 1900 can be configured based on the disclosed techniques or can implement the disclosed memory devices.

Specific examples of main memory 1904 include Random Access Memory (RAM) and semiconductor memory devices, which may include, in some embodiments, storage locations in semiconductors such as registers. Specific examples of static memory 1906 include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; RAM; and CD-ROM and DVD-ROM disks.

Machine 1900 may further include a display device 1910, an input device 1912 (e.g., a keyboard), and a user interface (UI) navigation device 1914 (e.g., a mouse). In an example, the display device 1910, the input device 1912, and the UI navigation device 1914 may be a touch screen display. The machine 1900 may additionally include a storage device (e.g., drive unit or another mass storage device) 1916, a signal generation device 1918 (e.g., a speaker), a network interface device 1920, and one or more sensors 1921, such as a global positioning system (GPS) sensor, compass, accelerometer, or other sensors. The machine 1900 may include an output controller 1928, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.). In some embodiments, the hardware processor 1902 and/or instructions 1924 may comprise processing circuitry and/or transceiver circuitry.

The storage device 1916 may include a machine-readable medium 1922 on which one or more sets of data structures or instructions 1924 (e.g., software) embodying or utilized by any one or more of the techniques or functions described herein can be stored. Instructions 1924 may also reside, completely or at least partially, within the main memory 1904, within static memory 1906, or the hardware processor 1902 during execution thereof by the machine 1900. In an example, one or any combination of the hardware processor 1902, the main memory 1904, the static memory 1906, or the storage device 1916 may constitute machine-readable media.

Specific examples of machine-readable media may include non-volatile memory, such as semiconductor memory devices (e.g., EPROM or EEPROM) and flash memory devices; magnetic disks, such as internal hard disks and removable disks; magneto-optical disks; RAM; and CD-ROM and DVD-ROM disks.

While the machine-readable medium 1922 is illustrated as a single medium, the term "machine-readable medium" may include a single medium or multiple media (e.g., a centralized or distributed database and/or associated caches and servers) configured to store instructions 1924.

An apparatus of the machine 1900 may be one or more of a hardware processor 1902 (e.g., a central processing unit (CPU), a graphics processing unit (GPU), a hardware processor core, or any combination thereof), a main memory 1904 and a static memory 1906, one or more sensors 1921, a network interface device 1920, one or more antennas 1960, a display device 1910, an input device 1912, a UI navigation device 1914, a storage device 1916, instructions 1924, a signal generation device 1918, and an output controller 1928. The apparatus may be configured to perform one or more of the methods and/or operations disclosed herein. The apparatus may be intended as a component of machine 1900 to perform one or more of the methods and/or operations disclosed herein and/or to perform a portion of one or more of the methods and/or operations disclosed herein. In some embodiments, the apparatus may include a pin or other means to receive power. In some embodiments, the apparatus may include power conditioning hardware.

The term "machine-readable medium" may include any medium that is capable of storing, encoding, or carrying instructions for execution by machine 1900 and that causes machine 1900 to perform any one or more of the techniques of the present disclosure or that is capable of storing, encoding, or carrying data structures used by or associated with such instructions. Non-limiting machine-readable medium examples may include solid-state memories and optical and magnetic media. Specific examples of machine-readable media may include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine-readable media may include non-transitory machine-readable media. In some examples, machine-readable media may include machine-readable media that is not a transitory propagating signal.

The instructions 1924 may further be transmitted or received over a communications network 1926 using a transmission medium via the network interface device 1920 utilizing any one of several transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi®, IEEE 802.16 family of standards known as WiMax®), IEEE 802.15.4 family of standards, a Long Term Evolution (LTE) family of standards, a Universal Mobile Telecommunications System (UMTS) family of standards, peer-to-peer (P2P) networks, among others.

In an example, the network interface device 1920 may include one or more physical jacks (e.g., Ethernet, coaxial, or phone jacks) or one or more antennas to connect to the communications network 1926. In an example, the network interface device 1920 may include one or more antennas 1960 to wirelessly communicate using at least one single-input multiple-output (SIMO), multiple-input multiple-output (MIMO), or multiple-input single-output (MISO) techniques. In some examples, the network interface device 1920 may wirelessly communicate using multiple-user MIMO techniques. The term "transmission medium" shall be taken to include any intangible medium that can store, encode, or carry instructions for execution by the machine 1900 and includes digital or analog communications signals or other intangible media to facilitate communication of such software.

Examples, as described herein, may include, or may operate on, logic or several components, modules, or mechanisms. Modules are tangible entities (e.g., hardware) capable of performing specified operations and may be configured or arranged in a particular manner. In an example, circuits may be arranged (e.g., internally or concerning external entities such as other circuits) in a specified manner as a module. In an example, the whole or part of one or more computer systems (e.g., a standalone, client, or server computer system) or one or more hardware processors may be configured by firmware or software (e.g., instructions, an application portion, or an application) as a module that operates to perform specified operations. In an example, the software may reside on a machine-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part, all, or any operation described herein. Considering examples in which modules are temporarily configured, each of the modules need not be instantiated at any one moment in time. For example, where the modules comprise a general-purpose hardware processor configured using the software, the general-purpose hardware processor may be configured as respective different modules at separate times. The software may accordingly configure a hardware processor, for example, to constitute a particular module at one instance of time and to constitute a different module at a different instance of time.

Some embodiments may be implemented fully or partially in software and/or firmware. This software and/or firmware may take the form of instructions contained in or on a non-transitory computer-readable storage medium. Those instructions may then be read and executed by one or more processors to enable the performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read-only memory (ROM), random access memory (RAM), magnetic disk storage media, optical storage media, flash memory, etc.

The above-detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, also contemplated are examples that include the elements shown or described. Moreover, also contemplated are examples using any combination or permutation of those elements shown or described (or one or more aspects thereof), either with respect to a particular example (or one or more aspects thereof) or with respect to other examples (or one or more aspects thereof) shown or described herein.

Publications, patents, and patent documents referred to in this document are incorporated by reference herein in their entirety, as though individually incorporated by reference. In the event of inconsistent usage between this document and those documents so incorporated by reference, the usage in the incorporated reference(s) is supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc., are used merely as labels and are not intended to suggest a numerical order for their objects.

The embodiments as described above may be implemented in various hardware configurations that may include a processor for executing instructions that perform the techniques described. Such instructions may be contained in a machine-readable medium such as a suitable storage medium or a memory or other processor-executable medium.

The embodiments as described herein may be implemented in several environments, such as part of a system on chip, a set of intercommunicating functional blocks, or similar, although the scope of the disclosure is not limited in this respect.

Described implementations of the subject matter can include one or more features, alone or in combination, as illustrated below by way of examples.

Example 1 is an apparatus comprising: a first plurality of adders comprising a corresponding plurality of input terminals receiving a first input symbol; a first plurality of comparators, an input terminal for each comparator of the first plurality of comparators coupled to a corresponding output terminal of an adder of the first plurality of adders; a second plurality of adders comprising a corresponding plurality of input terminals receiving a second input symbol; a second plurality of comparators, an input terminal for each comparator of the second plurality of comparators coupled to a corresponding output terminal of an adder of the second plurality of adders; and a first plurality of multiplexers, each multiplexer of the first plurality of multiplexers coupled to output terminals of the second plurality of comparators, and a selection terminal for each multiplexer of the first plurality of multiplexers is coupled to at least one output terminal of a comparator of the first plurality of comparators.

In Example 2, the subject matter of Example 1 includes a third plurality of adders comprising a corresponding plurality of input terminals receiving a third input symbol.

In Example 3, the subject matter of Example 2 includes a third plurality of comparators, wherein an input terminal for each comparator of the third plurality of comparators is coupled to a corresponding output terminal of an adder of the third plurality of adders.

In Example 4, the subject matter of Example 3 includes a second plurality of multiplexers, each multiplexer of the second plurality of multiplexers coupled to output terminals of the third plurality of comparators, and a selection terminal for each multiplexer of the second plurality of multiplexers is coupled to at least one output terminal of a multiplexer of the first plurality of multiplexers.

In Example 5, the subject matter of Example 4 includes a fourth plurality of adders comprising a corresponding plurality of input terminals receiving a fourth input symbol.

In Example 6, the subject matter of Example 5 includes a fourth plurality of comparators, wherein an input terminal for each comparator of the fourth plurality of comparators is coupled to a corresponding output terminal of an adder of the fourth plurality of adders.

In Example 7, the subject matter of Example 6 includes a third plurality of multiplexers, each multiplexer of the third plurality of multiplexers coupled to output terminals of the fourth plurality of comparators, and a selection terminal for each multiplexer of the third plurality of multiplexers is coupled to at least one output terminal of a comparator of the third plurality of comparators.

In Example 8, the subject matter of Example 7 includes a fourth plurality of multiplexers, each multiplexer of the fourth plurality of multiplexers coupled to output terminals of the third plurality of multiplexers, and a selection terminal for each multiplexer of the fourth plurality of multiplexers is coupled to at least one output terminal of a multiplexer of the second plurality of multiplexers.

In Example 9, the subject matter of Example 8 includes a first single output multiplexer, the first single output multiplexer comprising four input terminals coupled to corresponding output terminals of the first plurality of comparators.

In Example 10, the subject matter of Example 9 includes a second single output multiplexer, the second single output multiplexer comprising four input terminals coupled to corresponding output terminals of the first plurality of multiplexers.

In Example 11, the subject matter of Example 10 includes a third single output multiplexer, the third single output multiplexer comprising four input terminals coupled to corresponding output terminals of the second plurality of multiplexers.

In Example 12, the subject matter of Example 11 includes a fourth single output multiplexer, the fourth single output multiplexer comprising four input terminals coupled to corresponding output terminals of the fourth plurality of multiplexers.

In Example 13, the subject matter of Examples 1-12 includes one or more interconnects coupled to the first plurality of adders, the first plurality of comparators, the second plurality of adders, the second plurality of comparators, and a first plurality of multiplexers.

In Example 14, the subject matter of Examples 1-13 includes subject matter where the apparatus comprises a processor, and wherein the processor includes one or more of the first plurality of adders, the first plurality of comparators, the second plurality of adders, the second plurality of comparators, and a first plurality of multiplexers.

In Example 15, the subject matter of Examples 12-14 includes one or more interconnects coupling two or more of the first plurality of adders, the first plurality of comparators, the second plurality of adders, the second plurality of

EP 4 572 244 A1

comparators, the third plurality of adders, the third plurality of comparators, the fourth plurality of adders, the fourth plurality of comparators, the first plurality of multiplexers, the second plurality of multiplexers, the third plurality of multiplexers, and the fourth plurality of multiplexers.

Example 16 is a digital feedback equalizer comprising a plurality of loop unrolling circuits, each loop unrolling circuit of the plurality of loop unrolling circuits configured to receive an input symbol, generate a plurality of modified symbols based on the input symbol, and a plurality of symbol versions associated with a previously generated output symbol; and generate a plurality of output symbols based on the plurality of modified symbols; and a first plurality of multiplexers coupled to a first loop unrolling circuit of the plurality of loop unrolling circuits, the first plurality of multiplexers configured to output one or more of the plurality of output symbols generated by the first loop unrolling circuit based on a selection signal comprising one or more of the plurality of output symbols generated by a second loop unrolling circuit of the plurality of loop unrolling circuits.

In Example 17, the subject matter of Example 16 includes a first single output multiplexer coupled to the first loop unrolling circuit, the first single output multiplexer to output one of the plurality of output symbols generated by the first loop unrolling circuit based on a selection signal comprising the previously generated output symbol.

In Example 18, the subject matter of Example 17 includes a second plurality of multiplexers coupled to a second loop unrolling circuit of the plurality of loop unrolling circuits, the second plurality of multiplexers configured to output one or more of the plurality of output symbols generated by the second loop unrolling circuit based on a selection signal comprising one or more of the plurality of output symbols generated by the first loop unrolling circuit and output by the first plurality of multiplexers.

In Example 19, the subject matter of Example 18 includes a second single output multiplexer coupled to the second plurality of multiplexers, the second single output multiplexer to output one of the plurality of output symbols generated by the second loop unrolling circuit based on the selection signal comprising the previously generated output symbol.

In Example 20, the subject matter of Example 19 includes a third plurality of multiplexers coupled to a third loop unrolling circuit of the plurality of loop unrolling circuits, the third plurality of multiplexers configured to output one or more of the plurality of output symbols generated by the third loop unrolling circuit based on a selection signal comprising one or more of the plurality of output symbols generated by the second loop unrolling circuit.

In Example 21, the subject matter of Example 20 includes a fourth plurality of multiplexers coupled to the third plurality of multiplexers, the fourth plurality of multiplexers configured to output one or more of the plurality of output symbols generated by the third loop unrolling circuit based on a selection signal comprising one or more of the plurality of output symbols generated by the second loop unrolling circuit and output by the second plurality of multiplexers.

In Example 22, the subject matter of Example 21 includes a third single output multiplexer coupled to the fourth plurality of multiplexers, the third single output multiplexer to output one of the plurality of output symbols generated by the third loop unrolling circuit and output by the fourth plurality of multiplexers based on the selection signal comprising the previously generated output symbol.

Example 23 is a method comprising receiving at least a first input symbol and a second input symbol; generating a first plurality of modified symbols based on the first input symbol and a plurality of symbol versions associated with a previously generated output symbol; generating a first plurality of output symbols based on the first plurality of modified symbols; multiplexing the first plurality of output symbols to generate first multiplexed output symbols using a first selection signal, the first selection signal based on one or more of a second plurality of output signals corresponding to a second input signal; and outputting one of the first multiplexed output symbols using a second selection signal, the second selection signal based on the previously generated output symbol.

In Example 24, the subject matter of Example 23 includes generating a second plurality of modified symbols based on the second input symbol and the plurality of symbol versions associated with the previously generated symbol; generating a second plurality of output symbols based on the second plurality of modified symbols; and outputting one of the second plurality of modified symbols based on the previously generated output symbol.

Example 25 is at least one machine-readable medium including instructions that, when executed by processing circuitry, cause the processing circuitry to perform operations to implement any of Examples 1-24.

Example 26 is an apparatus comprising means to implement any of Examples 1-24.

Example 27 is a system to implement any of Examples 1-24.

Example 28 is a method to implement any of Examples 1-24.

The above description is intended to be illustrative and not restrictive. For example, the above-described examples (or one or more aspects thereof) may be used in combination with others. Other embodiments may be used, such as by one of ordinary skill in the art upon reviewing the above description. The abstract is to allow the reader to ascertain the nature of the technical disclosure quickly. It is submitted with the understanding that it will not be used to interpret or limit the scope or meaning of the claims. Also, in the above Detailed Description, various features may be grouped to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with a claim standing on its own as a separate embodiment. The scope of the embodiments disclosed herein is to be determined regarding the appended claims, along with the full scope of equivalents to which such claims are entitled.

**Claims**

1. An apparatus comprising:

    a first plurality of adders comprising a corresponding plurality of input terminals receiving a first input symbol;
    a first plurality of comparators, an input terminal for each comparator of the first plurality of comparators coupled to a corresponding output terminal of an adder of the first plurality of adders;
    a second plurality of adders comprising a corresponding plurality of input terminals receiving a second input symbol;
    a second plurality of comparators, an input terminal for each comparator of the second plurality of comparators coupled to a corresponding output terminal of an adder of the second plurality of adders; and
    a first plurality of multiplexers, each multiplexer of the first plurality of multiplexers coupled to output terminals of the second plurality of comparators, and a selection terminal for each multiplexer of the first plurality of multiplexers is coupled to at least one output terminal of a comparator of the first plurality of comparators.

2. The apparatus of claim 1, further comprising:

    a third plurality of adders comprising a corresponding plurality of input terminals receiving a third input symbol;
    a third plurality of comparators, wherein an input terminal for each comparator of the third plurality of comparators is coupled to a corresponding output terminal of an adder of the third plurality of adders; and
    a second plurality of multiplexers, each multiplexer of the second plurality of multiplexers coupled to output terminals of the third plurality of comparators, and a selection terminal for each multiplexer of the second plurality of multiplexers is coupled to at least one output terminal of a multiplexer of the first plurality of multiplexers.

3. The apparatus of claim 2, further comprising:

    a fourth plurality of adders comprising a corresponding plurality of input terminals receiving a fourth input symbol;
    a fourth plurality of comparators, wherein an input terminal for each comparator of the fourth plurality of comparators is coupled to a corresponding output terminal of an adder of the fourth plurality of adders; and
    a third plurality of multiplexers, each multiplexer of the third plurality of multiplexers coupled to output terminals of the fourth plurality of comparators, and a selection terminal for each multiplexer of the third plurality of multiplexers is coupled to at least one output terminal of a comparator of the third plurality of comparators.

4. The apparatus of claim 3, further comprising:

    a fourth plurality of multiplexers, each multiplexer of the fourth plurality of multiplexers coupled to output terminals of the third plurality of multiplexers, and a selection terminal for each multiplexer of the fourth plurality of multiplexers is coupled to at least one output terminal of a multiplexer of the second plurality of multiplexers;
    a first single output multiplexer, the first single output multiplexer comprising four input terminals coupled to corresponding output terminals of the first plurality of comparators; and
    a second single output multiplexer, the second single output multiplexer comprising four input terminals coupled to corresponding output terminals of the first plurality of multiplexers.

5. The apparatus of claim 4, further comprising:
    a third single output multiplexer, the third single output multiplexer comprising four input terminals coupled to corresponding output terminals of the second plurality of multiplexers.

6. The apparatus of claim 5, further comprising:
    a fourth single output multiplexer, the fourth single output multiplexer comprising four input terminals coupled to corresponding output terminals of the fourth plurality of multiplexers.

7. The apparatus of any of claims 1-6, further comprising:
    one or more interconnects coupled to the first plurality of adders, the first plurality of comparators, the second plurality of adders, the second plurality of comparators, and a first plurality of multiplexers.

8. The apparatus of any of claims 1-7, wherein the apparatus comprises a processor, and wherein the processor includes one or more of the first plurality of adders, the first plurality of comparators, the second plurality of adders, the second plurality of comparators, and a first plurality of multiplexers.

9. The apparatus of claim 6, further comprising one or more interconnects coupling two or more of:
the first plurality of adders, the first plurality of comparators, the second plurality of adders, the second plurality of comparators, the third plurality of adders, the third plurality of comparators, the fourth plurality of adders, the fourth plurality of comparators, the first plurality of multiplexers, the second plurality of multiplexers, the third plurality of multiplexers, and the fourth plurality of multiplexers.

10. A method comprising:

receiving at least a first input symbol and a second input symbol;
generating a first plurality of modified symbols based on the first input symbol and a plurality of symbol versions associated with a previously generated output symbol;
generating a first plurality of output symbols based on the first plurality of modified symbols;
multiplexing the first plurality of output symbols to generate first multiplexed output symbols using a first selection signal, the first selection signal based on one or more of a second plurality of output signals corresponding to a second input signal; and
outputting one of the first multiplexed output symbols using a second selection signal, the second selection signal based on the previously generated output symbol.

11. The method of claim 10, further comprising:

generating a second plurality of modified symbols based on the second input symbol and the plurality of symbol versions associated with the previously generated symbol;
generating a second plurality of output symbols based on the second plurality of modified symbols; and
outputting one of the second plurality of modified symbols based on the previously generated output symbol.

12. A computer program comprising instructions which, when the program is executed by a computer, cause the computer to carry out steps of the method according to one of Claims 10 or 11.

FIG. 1

EP 4 572 244 A1

FIG. 2

FIG. 3

FIG. 4

FIG. 5

**FIG. 6**

FIG. 7

FIG. 8

**FIG. 9**

**FIG. 10**

## 4-Symbol Lookahead DFE

FIG. 11

64-Symbol DFE

**FIG. 12**

1-Symbol Unroll by a Loop Unrolling Circuit

Vref[2:0][9:0]

1308

Loop Unrolled DFE for 1 Symbol

1302

Din[0][f-1:0]

1304

A_p3[9:0]

A_p1[9:0]

A_m1[9:0]

A_m3[9:0]

1306

1310
D_int[n][3][1:0]

1312
D_int[n][2][1:0]

1314
D_int[n][1][1:0]

1316
D_int[n][0][1:0]

**FIG. 13**

1400

## 4x4 MUX

Sel[3][1:0]

1412

1404

1420

Dout[3][1:0]

1414

Sel[2][1:0]

1402

1406

1422

Din[3][1:0]

Din[2][1:0]

Din[1][1:0]

Din[0][1:0]

Dout[2][1:0]

1416

Sel[1][1:0]

Data[3:0][1:0]

1408

1424

Dout[1][1:0]

Sel[3:0][1:0]

1418

Sel[0][1:0]

1410

1426

Dout[0][1:0]

# FIG. 14

FIG. 15

**FIG. 16**

EP 4 572 244 A1

**FIG. 17**

EP 4 572 244 A1

_1800_

RECEIVE AT LEAST A FIRST INPUT SYMBOL AND A SECOND INPUT SYMBOL — _1802_

GENERATE A FIRST PLURALITY OF MODIFIED SYMBOLS BASED ON THE FIRST INPUT SYMBOL AND A PLURALITY OF SYMBOL VERSIONS ASSOCIATED WITH A PREVIOUSLY GENERATED OUTPUT SYMBOL — _1804_

GENERATE A FIRST PLURALITY OF OUTPUT SYMBOLS BASED ON THE FIRST PLURALITY OF MODIFIED SYMBOLS — _1806_

MULTIPLEX THE FIRST PLURALITY OF OUTPUT SYMBOLS TO GENERATE FIRST MULTIPLEXED OUTPUT SYMBOLS USING A FIRST SELECTION SIGNAL THAT IS BASED ON ONE OR MORE OF A SECOND PLURALITY OF OUTPUT SIGNALS CORRESPONDING TO A SECOND INPUT SIGNAL — _1808_

OUTPUT ONE OF THE FIRST MULTIPLEXED OUTPUT SYMBOLS USING A SECOND SELECTION SIGNAL, THE SECOND SELECTION SIGNAL BASED ON THE PREVIOUSLY GENERATED OUTPUT SYMBOL — _1810_

# FIG. 18

**FIG. 19**

Europäisches
Patentamt

European
Patent Office

Office européen
des brevets

# EUROPEAN SEARCH REPORT

**Application Number**

EP 24 20 9836

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 058 431 A2 (LUCENT TECHNOLOGIES INC [US]) 6 December 2000 (2000-12-06) | 10-12 | INV.<br>H04L25/03 |
| Y | * paragraph [0001] *<br>* paragraph [0007] *<br>* paragraph [0022] - paragraph [0031] *<br>* paragraph [0035] *<br>* figures 3, 4 *<br>* claims 36, 37 * | 1-9 | |
| | - - - - - | | |
| Y | US 2020/252248 A1 (PALUSA CHAITANYA [US] ET AL) 6 August 2020 (2020-08-06)<br>* paragraph [0042] *<br>* figures 7B, 7C * | 1-9 | |
| | - - - - - | | |
| X | US 9 800 435 B1 (HO HUONG [CA])<br>24 October 2017 (2017-10-24)<br>* column 3, line 38 - line 49 *<br>* column 4, line 44 - line 49 *<br>* figures 2A, 5B * | 1 | |
| | - - - - - | | |

**TECHNICAL FIELDS SEARCHED (IPC)**

H04L

The present search report has been drawn up for all claims

| Place of search | Date of completion of the search | Examiner |
|---|---|---|
| Munich | 16 April 2025 | Marzenke, Marco |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 9836

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2025

| Patent document cited in search report | | Publication date | Patent family member(s) | | Publication date |
|---|---|---|---|---|---|
| EP 1058431 | A2 | 06-12-2000 | CA | 2310190 A1 | 04-12-2000 |
| | | | DE | 60036834 T2 | 07-08-2008 |
| | | | EP | 1058431 A2 | 06-12-2000 |
| | | | US | 6192072 B1 | 20-02-2001 |
| US 2020252248 | A1 | 06-08-2020 | CN | 111510404 A | 07-08-2020 |
| | | | CN | 111510405 A | 07-08-2020 |
| | | | KR | 20200096150 A | 11-08-2020 |
| | | | KR | 20200096159 A | 11-08-2020 |
| | | | TW | 202037107 A | 01-10-2020 |
| | | | US | 2020252247 A1 | 06-08-2020 |
| | | | US | 2020252248 A1 | 06-08-2020 |
| | | | US | 2021160107 A1 | 27-05-2021 |
| US 9800435 | B1 | 24-10-2017 | US | 9800435 B1 | 24-10-2017 |
| | | | WO | 2017219533 A1 | 28-12-2017 |

For more details about this annex : see Official Journal of the European Patent Office, No. 12/82